# EUROPEAN PATENT SPECIFICATION

(11) **EP 4 006 327 B1**
(45) Date of publication and mention of the grant of the patent: **03.07.2024**
(21) Application number: 20210581.3
(22) Date of filing: 30.11.2020
(51) Int. Cl.: F02M 21/02, F02M 51/06, F02M 61/12

(54) **INJECTION VALVE FOR CONTROLLING A FLUID FLOW AND ENGINE WITH THE INJECTION VALVE**
EINSPRITZVENTIL ZUR STEUERUNG EINES FLUIDSTROMS UND MOTOR MIT DEM EINSPRITZVENTIL
SOUPAPE D'INJECTION POUR COMMANDER UN ÉCOULEMENT DE FLUIDE ET MOTEUR COMPORTANT LA SOUPAPE D'INJECTION

(43) Date of publication of application: 01.06.2022
(73) Proprietor: Vitesco Technologies GmbH, 93055 Regensburg (DE)
(72) Inventor: Grandi, Mauro - c/o Continental Automotive GmbH, 81737 Munich (DE)
(74) Representative: Vitesco Technologies

(56) References cited:
- CN-A- 111 271 196
- US-A1- 2004 036 048

## Description

The invention relates to an injection valve for controlling a fluid flow, to an engine with the injection valve and to methods on operating the injection valve.

Injection valves are in widespread use, in particular for internal combustion engines, where they may be arranged in order to doze a fluid into an intake manifold of the internal combustion engine or directly into a combustion chamber of a cylinder of the internal combustion engine. The injection valves may further be used for guiding and controlling the fluid flow from, in particular for gasoline fuels, from a storage area to a combustion area.

Injection valves are manufactured in various forms in order to satisfy the various needs for the various engines. Therefore, for example their lengths, their diameter and also various elements of the injection valve being responsible for the way the fluid is controlled and/or dozed may derive in a wide range. In addition to that, injection valves may accommodate an actuator for actuating a needle of the injection valve which may, for example, be an electromagnetic actuator. Due to environmental and/or legislative reasons, it may be necessary to use gases like hydrogen or compressed methane gas (CNG, methane) as fuel for internal combustion engines. These gases can be produced out of renewable energies such as wind or solar power in a process known as power to gas. For example, hydrogen can be produced via electrolysis and methane can be produced from a synthesis of hydrogen and CO2. These gases are then CO2 neutral and contribute to a reduction of climate change. Methane and hydrogen applications are not limited to internal combustion engines or fuel cells. These are flexible gases which can also be used in household applications, industries or further engines. Document CN 111 271 196 A discloses an injection valve.

Engines are operable with gases like methane or hydrogen in an Otto-cycle. This allows for very low particle emissions and NOX emissions when compared to the same engine operating with gasoline.

The requirements for injecting gases like methane or hydrogen into for example an internal combustion engine differ from gasoline injection. The injection valves for injecting gaseous fuels require very tight sealing properties to achieve the desired sealing requirements and large cross-sections for the openings to deliver the required gas quantity. Further it is necessary to reduce the risk for external gas leakage. These requirements are normally achieved with injection valve having a large number of different parts and a specific design which increases the overall costs for such injection valves.

The object of the present disclosure is therefore to create an injection valve and an engine with the injection valve with a simplified design and which allows to control a fluid flow in a reliable and precise manner.

These objects are achieved by an injection valve comprising the features of the independent claim and an engine comprising the injection valve. Advantageous embodiments of the injection valve and the engine are specified in the dependent claims.

An injection valve for controlling a fluid flow is specified. The injection valve extends along a central longitudinal axis and comprises a valve body, an armature element, a pole piece and a calibration spring. The valve body forms a valve cavity and comprises a valve seat and a first and a second opening for allowing the fluid flow through the injection valve. The valve body is therefore at least partially hollow to form the valve cavity. The fluid flows through the valve cavity. The first and the second opening in the valve seat are arranged to provide fluid flow openings to allow the fluid to flow through the first opening and through the second opening through the valve cavity of the valve body.

The armature element is arranged axially moveable in the cavity and comprises an armature portion and a needle portion. The armature element is therefore axially moveable with respect to the central longitudinal axis. The armature element has according to one embodiment an elongated rotational symmetric shape and is arranged coaxially with respect to the central longitudinal axis. The armature portion is according to one embodiment made of a material which can be magnetized. The needle portion is according to one embodiment arranged next to the armature portion and extends along the central longitudinal axis until one longitudinal end of the armature element. The armature portion is according to one embodiment arranged at the other longitudinal end of the armature element. According to the present disclosure, the armature element comprises a bore. The c bore houses the calibration spring and provides a first contact surface for the calibration spring. The bore extends from the armature portion into the armature element. The bore is a blind hole according to one embodiment. According to another embodiment the bore comprises a step. The first contact surface for the calibration spring is according to this embodiment the bottom of the blind hole or the step of the bore. According to one embodiment is the bore arranged coaxially with respect to the central longitudinal axis.

According to the present disclosure, the pole piece is arranged at a valve body and provides a second contact surface for the calibration spring. The calibration spring is therefore engaged between the first contact surface of the armature element and the second contact surface of the pole piece so that the armature element is biased by the calibration spring away from the pole piece. According to the present disclosure, the needle portion is pressed against the valve seat by the calibration spring in a closed position. The needle portion contacts in the closed position the valve seat. The fluid flow is due to the contact through the second opening inhibited. The needle portion allows the fluid flow through the second opening in further positions. When the needle portion is displaced away from the closed position, the fluid can flow through the injection valve. According to the present disclosure, the first opening extends radially through the valve body with respect to the central longitudinal axis and the second opening extends axially through the valve body with respect to the central longitudinal axis. In other words, the first opening allows the fluid to flow through a lateral, a radial surface of the valve body into the valve cavity of the valve body. A lateral surface is for example a shell surface of the valve body if the valve body has the shape for example of a cylinder. According to one embodiment, the second opening is received in the valve seat and the second opening is arranged coaxially with respect to the central longitudinal axis. Due to the radially arrangement of the first opening and due to the coaxially arrangement of the second opening with respect to the central longitudinal axis, the axis of the first opening and the axis of the second opening are arranged with an angle to one another. In other words, the axis of the first opening and the axis of the second opening are not arranged in parallel, but at an angle to one another, for example at an angle between 65° and 105°, e.g. at right angles. According to the present disclosure it is possible to have an armature element which comprises the armature portion and the needle portion and fulfills all requirements to open and to close the injection valve for allowing and/or for inhibiting the fluid flow through the injection valve. Further, the injection valve according to the present disclosure allows a very simple adjustment and positioning for the calibration spring. Further, the first opening and the second opening allow the desired fluid flow through the injection valve with gaseous fluids. Because it is possible for the first and the second openings to allow the required large cross-sections. In addition, the design of the armature element according to the present disclosure in combination with the calibration spring within the bore allows to create the required sealing properties for gaseous fluids. Overall, the injection valve according to the present disclosure requires advantageous few parts compared to conventional injections valves for gaseous fluids. Further, the injection valve according to the present disclosure creates the desired reliable and precise fluid flow control through the injection valve.

According to one embodiment, the armature portion and the needle portion are integrally formed. In other words, the armature portion and the needle portion are formed out of a single part, for example via turning and milling. According to another embodiment, the armature portion and the needle portion are fixedly coupled at each other. According to these embodiments it is in particular easy and simple to transfer the movement from the armature portion to the needle portion so that the needle portion opens and closes as desired. In addition, the armature element according to this embodiment is advantageous inexpensive.

According to the invention, the injection valve comprises a solenoid actuator which attracts the armature element when energized and thereby moves the needle portion away from the closed position in a further position to allow the fluid flow through the injection valve. A solenoid actuator is well known and established actuator for actuating injection valves. With the solenoid actuator in combination with the armature it is therefore in particular simple to move the needle portion away from the closed position in further positions.

According to one embodiment, the valve body comprises two or more first openings which are distributed radially around the valve body. According to this embodiment can the fluid not only flow through one opening into the valve cavity but through the available two or more first openings. The first openings are according to another embodiment distributed equally around the valve body. If for example the valve body comprises two first openings, then the two first openings are arranged on opposing sides of the valve body. According to this embodiment it is possible to allow a symmetric fluid flow in and out of the first openings through the valve body. This improves the overall fluid flow through the valve cavity. Further it is possible to enhance the fluid quantity flowing through the injection valve.

According to one embodiment, the one or more first openings are arranged in an area of the valve body which extends from the valve seat to an imagined surface which extends right-angled away from the central longitudinal axis along the armature portion of the armature element to define the area of the valve body. In other words, the one or more first openings extend through the valve body in the specific area of the valve body. The specific area is defined from the valve seat to the imagined surface. According to this embodiment, the one or more first openings are arranged relatively close to the valve seat. This allows a relatively direct fluid flow from the first openings to the second openings. This has the advantage that there are not many frictional losses of the fluid flow through the injection valve. Further, this design helps to simplify the overall design of the injection valve and keeps the number of different parts low, in particular if the valve seat is comprised by the valve body. The imagined surface is a surface is only used to describe the area according to this embodiment. The imagined surface extends from the central longitudinal axis along the armature portion through the valve body so that the imagined surface can separate the lateral surface of the valve body into the area in which the two or more first openings are arranged and into the outer area. According to one embodiment, the imagined surface extends along the part of the armature portion which is closest to the needle portion. Thereby, the area of the valve body for the one or more first openings is in addition smaller so that the one or more first openings are even closer to the valve seat which further improvs the fluid flow through the injection valve.

According to one embodiment, the valve body has the basic shape of a hollow cylinder which comprises on its lateral surface the one or more first openings and on its top surface the pole pieces which seal the valve cavity and on its bottom surface the second opening. According to this embodiment, the top surface of the hollow cylindrical comprises a big opening to allow the assembly of the armature element and the calibration spring into the valve cavity. After the assembly of the calibration spring and the armature element, the pole piece can be arranged on the top surface of the valve body so that it provides the second contact surface for the calibration spring. Further, the pole piece seals thereby the valve cavity on the top surface of the valve body. It is advantageous simple to create the valve cavity of the valve body via the pole piece. It is thereby possible to further reduce costs without reducing the quality of the injection valve.

According to one embodiment, the valve body and the valve seat are integrally formed. This further reduces the required numbers of parts.

According to one embodiment, the pole piece is welded to the valve body via a single laser weld. After the assembly of the pole piece to the valve body, the single laser weld is applied to the injection valve to fix the pole piece to the injection valve according to this embodiment. The single laser weld is thereby the only weld needed to seal the valve cavity from the outside. The valve body is according to one embodiment formed out of one part and the pole piece is the only part needed to close the valve cavity. Due to the fact that only one single laser weld is required to close the valve cavity, the production costs of the injection valve can advantageously further be reduced. In addition, the design according to this embodiment further reduces the required number of parts which further simplifies the overall design of the injection valve.

According to one embodiment, the armature portion of the armature element has a sleeve shape and contacts with an outer surface at least partially an inner surface of the valve body whereby the movement of the armature element is guided by the inner surface of the valve body and an outer surface of the armature elements. The sleeve shape of the armature element can according to another embodiment also be a ring shape. The outer surface is according to one embodiment the radial outer surface of the armature portion which is arranged farthermost away from central longitudinal axis when the armature element is arranged in the injection valve. The movement of the armature element needs to be guided because otherwise the armature element could tilt within the valve cavity which could lead to leakage of the injection valve. The outer surface of the armature element provides in combination with the inner surface of the valve body the required guiding surface to guide the movement of the armature element during operation of the injection valve. Both surfaces, the inner and outer surface are already existing and do not need to be manufactured additionally. Thereby, the manufacturing of the injection valve according to this embodiment is advantageously simplified which reduces the overall costs of the injection valve.

According to the invention, the armature element comprises a first guiding protrusion and a second guiding protrusion which are axially spaced from one another with respect to the central longitudinal axis and which contacts at least partially an inner surface to the valve body whereby the movement of the armature element is guided by the guiding protrusions and the inner surface of the valve body. The first guiding protrusion and the second guiding protrusion are according to one embodiment arranged at different axial positions of the armature element. For example, the first guiding protrusion is arranged at the armature portion and the second guiding protrusion is arranged at the needle portion. According to another embodiment, the first guiding protrusion and the second guiding protrusion are both arranged at the needle portion at different axial positions. The first guiding protrusion and the second guiding protrusion are for example integrally formed with the armature element. According to another embodiment, the first guiding protrusion and the second guiding protrusion are for example rings or other parts which are fixed at the armature element. The first guiding protrusion and the second guiding protrusion can be arranged at the armature element at different positions depending on the application of the injection valve. This increases the variety of different applications of the injection valve. Further it is possible to arrange the first guiding protrusion and the second guiding protrusion at the different longitudinal ends of the armature element which helps to avoid tilting of the armature element during operation of the injection valve.

According to one embodiment, the axis of the one or more first openings and the axis of the second openings are arranged with an angle of 90° to each other. According to this embodiment, the axis of the second opening is arranged parallel to the central longitudinal axis and the axis of the one or more first openings are or is arranged orthogonal with respect to the central longitudinal axis. If the valve body has the basic shape of a cylinder it is in particular simple to manufacture the first openings and the second openings according to the present embodiment. Overall, the manufacturing costs of the valve body comprising the one or more first openings and the second openings can be reduced.

According to one embodiment, the injection valve comprises an outer upper sealing and an outer lower sealing, which are arranged on a radial outer surface of the valve body and which are axially spaced apart from each other with respect to the central longitudinal axis, wherein the one or more first openings is or are arranged between the outer upper sealing and the outer lower sealing. The outer upper sealing and the outer lower sealing are arranged to seal between the injection valve and further parts into which the injection valve may be arranged. Further, it is conceivable that the outer upper sealing and the outer lower sealing seal between the first openings and parts which are arranged next to the first openings and which provide the fluid to the first openings.

According to one embodiment, a first method for operating an injection valve according to at least one of the embodiments described above is disclosed, wherein the fluid flows through the injection valve from the one or more first openings into the valve cavity and through the second opening out of the valve cavity. According to this embodiment, the fluid flow out of the second opening can be controlled advantageously good via the armature element, in particular via the needle portion of the armature element.

According to one embodiment, a second method for operating an injection valve according to at least one of the embodiments described above is disclosed, wherein the fluid flows through the injection valve from the second opening into the valve cavity and through the one or more first openings out of the valve cavity. According to this embodiment, the fluid flow into the valve cavity can be in particular good controlled via the armature element, and in particular via the valve needle portion of the armature element.

According to another aspect of the present disclosure, an engine comprises an injection valve according to at least one of the embodiments described above. The engine is, according to one embodiment, an internal combustion engine which uses gaseous fuels and/or fluids. According to another embodiment, the engine comprises a fuel cell which uses hydrogen. The injection valve in the engine is for example used to control the fluid flow of gaseous fuels and/or hydrogen into the internal combustion engine and/or into or to the fuel cell.

Further advantageous embodiments of the present disclosure will become apparent from the detailed description of exemplary embodiments in connection with the figures. In the figures:
- Figure 1:: shows a schematic longitudinal section of an injection valve according to an embodiment not covered by the claims,
- Figure 2:: shows another schematic longitudinal section of an injection valve according to the embodiment not covered by the claims,
- Figure 3:: shows a schematic longitudinal section of an injection valve according to a first exemplary embodiment,
- Figure 4: shows a schematic longitudinal section of an injection valve according to an embodiment not covered by the claims,
- Figure 5:: shows a schematic longitudinal section of an injection valve according to a second exemplary embodiment,
- Figure 6:: shows another schematic longitudinal section of the injection valve according to the second exemplary embodiment.

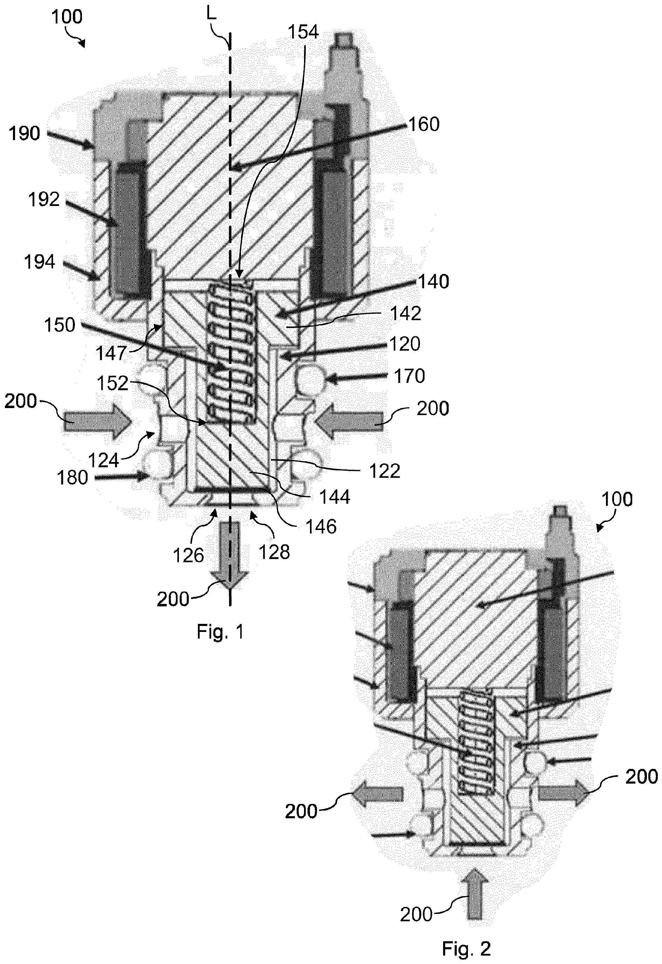

Figure 1 shows a longitudinal section view of an injection valve 100. The injection vale 100 comprises a valve body 120. The valve body 120 forms a valve cavity 122. The valve body 120 further comprises two first openings 124. The valve body 120 further comprises a second opening 126. The injection valve 100 extends along a central longitudinal axis L. The second opening 126 is arranged coaxially with respect to the central longitudinal axis 11. The first openings 124 are arranged orthogonally through the valve body 120 with respect to the central longitudinal axis L. The valve body 120 further forms a valve seat 128. The valve seat 128 is integrally formed with the valve body 120. The injection valve 100 further comprises an armature element 140 which comprises an armature portion 142 and a needle portion 144. The armature portion 142 and the needle portion 144 are integrally formed, which means that the whole armature element 140 comprising the armature portion 142 and the needle portion 144 are for example drilled and milled out of a single part. The armature element 140 is arranged moveable within the valve cavity 122. The needle portion 144 further comprises a needle sealing 146. The needle sealing 146 is according to one embodiment a rubber coating on the needle portion 144 for sealing between the needle portion 144 and the valve seat 128 of the valve body 120. The armature element 140 further comprises a guiding portion 147 which is arranged to guide the movement of the armature element 114 during operation of the injection valve 100. The injection valve 100 further comprises a calibration spring 150. The calibration spring is arranged within the valve cavity 122 of the valve body 120 to bias the armature element 140 against the valve seat 128 of the valve body 120 to hold the armature element 140 in a closed position. In the closed position the fluid flow through the injection valve 100 is inhibited. In further positions of the armature element 140 the fluid flow through the injection valve is allowed. The calibration spring 150 is arranged in a bore of the armature element 140. The bore is according to this embodiment a blind hole. The bore extends from one longitudinal end of the armature element into the armature element starting from the armature portion 142. The bore provides a first contact surface 152 for the calibration spring 150.

The injection valve 100 further comprises a pole piece 160. The pole piece 160 is arranged at a longitudinal end of the valve body 120 and seals the valve cavity 122 at this longitudinal end of the valve body 120. The longitudinal end where the pole piece 160 is arranged is opposite from the longitudinal end at which the valve seat 128 is arranged. The pole piece 160 provides a second contact surface 154 for the calibration spring 150. The calibration spring 150 is therefore arranged between the first contact surface 152 in the bore of the armature element 140 and the second contact surface 154 of the pole piece 160.

The injection valve 100 according to this embodiment further comprises an outer upper sealing 170 and an outer lower sealing 108. The outer upper sealing 170 and the outer lower sealing 180 are arranged to seal between the injection valve 100 and further parts into which the injection valve may be arranged (the further parts are not shown).

The injection valve 100 further comprises a solenoid actuator 190. The solenoid actuator 190 comprises a coil 192 and an actuator housing 194. The solenoid actuator 190 is arranged to attract the armature portion 142 of the armature element 140 when energized. In this case, the armature portion 142 and therefore also the needle portion 144 moves from the closed position away in further positions to allow the fluid flow through the injection valve 100.

Figure 1 further shows a fluid flow direction 200. According to the embodiment of figure 1, the fluid flows through the injection valve 100 from the first opening 124 into the valve cavity 122 and out of the valve cavity 122 through the second opening 126.

Figure 1 shows that the first openings 124 are arranged on a lateral surface of the valve body 120. In addition, figure 1 shows that the second opening 126 are arranged in the bottom area of the valve body 120.

Figure 2 shows the same exemplary embodiment of the injection valve 100 as shown in figure 1. The difference in figure 2 is the fluid flow direction 200. In figure 2, the fluid flows through the injection valve 100 in the outer direction as shown in figure 1. Therefore, the fluid flows into the valve cavity 122 through the second opening 126 and out of the valve cavity 122 through the first openings 124.

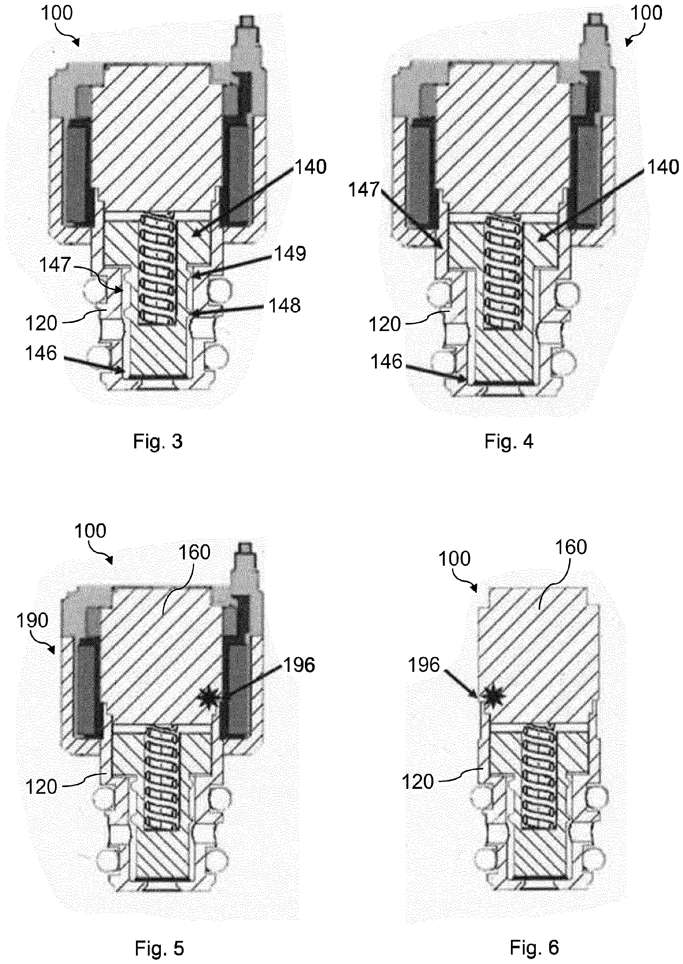

Figure 3 shows a first exemplary embodiment of the injection valve 100. The first exemplary embodiment of figure 3 differs from the embodiment not covered by the claims in the guiding portion 147 of the armature element 140. The guiding portion 147 of the armature element 140 as shown in figure 3 comprises a first guiding protrusion 148 and a second guiding protrusion 149. The first guiding protrusion 148 and the second guiding protrusion 149 are both arranged on the needle portion 144 of the armature 140. The first guiding protrusion 148 and the second guiding protrusion 149 contact the inner surface of the valve cavity 122 and thereby guide the movement of the armature element 140 during operation of the injection valve 100. Figure 3 further shows a needle sealing 146. The needle sealing 146 is according to this embodiment a rubber coating on the needle portion 144.

Figure 4 shows a longitudinal section of the injection valve 100 according to an embodiment not covered by the claims. This embodiment comprises a guiding portion 147 which differs from the guiding portion shown in figure 3. The guiding portion 147 according to this embodiment comprises a guiding surface on the armature portion 142 of the armature element 140. The guiding surface is the radial outer surface of the armature portion 142. The outer surface contacts an inner surface of the valve cavity 122 and thereby guides the movement of the armature element 140 within the valve cavity 122 during operation of the injection valve 100.

The figures 5 and 6 show a longitudinal section of the injection valve 100 according to a second exemplary embodiment. This embodiment shows a single laser weld 196 which fixes the pole piece 160 to the valve body 120. The single laser weld 196 provides the required sealing between the valve body 120 and the pole piece 160. In addition, the injection valve 100 according to this embodiment has only one single laser weld 196 to seal between the pole piece 160 and the valve body 120. Figure 5 shows in comparison to figure 6 in addition also the solenoid actuator 190.

## Claims

1. Injection valve (100) for controlling a fluid flow, wherein the injection valve (100) extends along a central longitudinal axis (L) and comprises a valve body (120), an armature element (140), a pole piece (160) and a calibration spring (150), wherein the valve body (120) forms a valve cavity (122) and comprises a valve seat (128) and a first and a second opening (124, 126) for allowing the fluid flow through the injection valve (100),
wherein the armature element (140) is arranged axially movable in the cavity (122) and comprises an armature portion (142), a needle portion (144) and a bore which houses the calibration spring (150) and provides a first contact surface (152) for the calibration spring (150),
wherein the pole piece (160) is arranged at the valve body (120) and provides a second contact surface (154) for the calibration spring (150),
wherein the needle portion (144) is pressed against the valve seat (128) by the calibration spring (150) in a closed position inhibiting the fluid flow through the second opening (126) and wherein the needle portion (144) allows the fluid flow through the second opening (126) in further positions,
wherein the first opening (124) extends radially through the valve body (120) with respect to the central longitudinal axis (L) and the second opening (126) extends in axial direction through the valve body (120) with respect to the central longitudinal axis (L) so that the axis of the first opening (124) and the axis of the second opening (126) are arranged at an angle to one another, **characterized in that** the injection valve (100) comprises a solenoid actuator (190) which attracts the armature element (140) when energized and thereby moves the needle portion (144) away from the closed position in further positions to allow the fluid to flow through the injection valve (100), the armature element (140) comprises a first guiding protrusion (148) and an second guiding protrusion (149) which are axially spaced from one another with respect to the central longitudinal axis (L) and which contact at least partially an inner surface of the valve body (120) whereby the movement of the armature element (140) is guided by the guiding protrusions (148, 149) and the inner surface of the valve body (120).

2. Injection valve (100) according to claim 1, wherein the armature portion (142) and the needle portion (144) are integrally formed.

3. Injection valve (100) according to any one of the preceding claims, wherein the valve body (120) comprises two or more first openings (124) which are distributed laterally around the valve body (120).

4. Injection valve (100) according to any one of the preceding claims, wherein the one or more first openings (124) are arranged in an area of the valve body (120) which extends from the valve seat (128) to an imagined surface which extends right-angled away from the central longitudinal axis (L) along the armature portion (142) of the armature element (140) to define the area of the valve body (120).

5. Injection valve (100) according to any one of the preceding claims, wherein the valve body (120) has the basic shape of a hollow cylinder, which comprises on its lateral surface the one or more first openings (124) and on its top surface the pole piece (160) which seals the valve cavity (122) and on its bottom surface the second opening (126).

6. Injection valve (100) according to any one of the preceding claims, wherein the pole piece (160) is welded to the valve body (120) via a single laser weld.

7. Injection valve (100) according to any one of the preceding claims, wherein the armature portion (142) of the armature element (140) has a sleeve shape and contacts with an outer surface at least partially an inner surface of the valve body (120) whereby the movement of the armature element (140) is guided by the inner surface of the valve body (120) and the outer surface of the armature element (140).

8. Injection valve (100) according to any one of the preceding claims, wherein the axis of the one or more first openings (124) and the axis of the second opening (126) are arranged with an angle of 90 degrees to one another.

9. Injection valve (100) according to any one of the preceding claims, wherein the injection valve (100) comprises an outer upper sealing (170) and an outer lower sealing (180), which are arranged on a radial outer surface of the valve body (120) and which are axially spaced apart from each other with respect to the central longitudinal axis (L), wherein the one or more first openings (124) is or are arranged between the outer upper sealing (170) and the outer lower sealing (180).

10. Method for operating an injection valve (100) according to any one of the preceding claims, wherein the fluid flows through the injection valve (100) from the one or more first openings (124) into the valve cavity (122) and through the second opening (126) out of the valve cavity (122).

11. Method for operating an injection valve (100) according to any of the claims 1 to 10, wherein the fluid flows through the injection valve (100) from the second opening (126) into the valve cavity (122) and through the one or more first openings (124) out of the valve cavity (122).

12. Engine with an injection valve (100) according to any one of the preceding claims 1 to 9.

## Patentansprüche

1. Einspritzventil (100) zum Steuern eines Fluidstroms, wobei sich das Einspritzventil (100) entlang einer zentralen Längsachse (L) erstreckt und ein Ventilgehäuse (120), ein Ankerelement (140), ein Polstück (160) und eine Kalibrierfeder (150) umfasst, wobei das Ventilgehäuse (120) einen Ventilhohlraum (122) bildet und einen Ventilsitz (128) sowie eine erste und eine zweite Öffnung (124, 126) zum Ermöglichen des Fluidstroms durch das Einspritzventil (100) umfasst,
wobei das Ankerelement (140) axial beweglich in dem Hohlraum (122) angeordnet ist und einen Ankerabschnitt (142), einen Nadelabschnitt (144) und eine Bohrung umfasst, die die Kalibrierfeder (150) aufnimmt und eine erste Kontaktfläche (152) für die Kalibrierfeder (150) bereitstellt,
wobei das Polstück (160) am Ventilgehäuse (120) angeordnet ist und eine zweite Kontaktfläche (154) für die Kalibrierfeder (150) bereitstellt,
wobei der Nadelabschnitt (144) in einer geschlossenen Position durch die Kalibrierfeder (150) gegen den Ventilsitz (128) gedrückt wird und den Fluidstrom durch die zweite Öffnung (126) verhindert, und wobei der Nadelabschnitt (144) in weiteren Positionen den Fluidstrom durch die zweite Öffnung (126) ermöglicht, wobei sich die erste Öffnung (124) radial durch das Ventilgehäuse (120) in Bezug auf die zentrale Längsachse (L) erstreckt und sich die zweite Öffnung (126) in axialer Richtung durch das Ventilgehäuse (120) in Bezug auf die zentrale Längsachse (L) erstreckt, so dass die Achse der ersten Öffnung (124) und die Achse der zweiten Öffnung (126) in einem Winkel zueinander angeordnet sind, **dadurch gekennzeichnet, dass** das Einspritzventil (100) einen Solenoidaktuator (190) umfasst, der das Ankerelement (140) anzieht, wenn er erregt wird, und dadurch den Nadelabschnitt (144) aus der geschlossenen Position in weitere Positionen bewegt, um es dem Fluid zu ermöglichen, durch das Einspritzventil (100) zu strömen, und das Ankerelement (140) einen ersten Führungsvorsprung (148) und einen zweiten Führungsvorsprung (149) umfasst, die in Bezug auf die zentrale Längsachse (L) axial zueinander beabstandet sind und die zumindest teilweise eine Innenfläche des Ventilgehäuses (120) berühren, so dass die Bewegung des Ankerelements (140) durch die Führungsvorsprünge (148, 149) und die Innenfläche des Ventilgehäuses (120) geführt wird.

2. Einspritzventil (100) nach Anspruch 1, wobei der Ankerabschnitt (142) und der Nadelabschnitt (144) einstückig ausgebildet sind.

3. Einspritzventil (100) nach einem der vorhergehenden Ansprüche, wobei das Ventilgehäuse (120) zwei oder mehr erste Öffnungen (124) umfasst, die seitlich entlang des Ventilgehäuses (120) verteilt sind.

4. Einspritzventil (100) nach einem der vorhergehenden Ansprüche, wobei die eine oder die mehreren ersten Öffnungen (124) in einem Bereich des Ventilgehäuses (120) angeordnet sind, der sich vom Ventilsitz (128) zu einer gedachten Fläche erstreckt, die sich rechtwinklig von der zentralen Längsachse (L) weg entlang des Ankerabschnitts (142) des Ankerelements (140) erstreckt, um den Bereich des Ventilgehäuses (120) zu definieren.

5. Einspritzventil (100) nach einem der vorhergehenden Ansprüche, wobei das Ventilgehäuse (120) die Grundform eines Hohlzylinders aufweist, der an seiner Mantelfläche die eine oder die mehreren ersten Öffnungen (124) und an seiner Oberseite das den Ventilhohlraum (122) verschließende Polstück (160) und an seiner Unterseite die zweite Öffnung (126) umfasst.

6. Einspritzventil (100) nach einem der vorhergehenden Ansprüche, wobei das Polstück (160) über eine einzige Laserschweißung mit dem Ventilgehäuse (120) verschweißt ist.

7. Einspritzventil (100) nach einem der vorhergehenden Ansprüche, wobei der Ankerabschnitt (142) des Ankerelements (140) eine Hülsenform aufweist und mit einer Außenfläche zumindest teilweise eine Innenfläche des Ventilgehäuses (120) berührt, so dass die Bewegung des Ankerelements (140) durch die Innenfläche des Ventilgehäuses (120) und die Außenfläche des Ankerelements (140) geführt wird.

8. Einspritzventil (100) nach einem der vorhergehenden Ansprüche, wobei die Achse der einen oder der mehreren ersten Öffnungen (124) und die Achse der zweiten Öffnung (126) in einem Winkel von 90 Grad zueinander angeordnet sind.

9. Einspritzventil (100) nach einem der vorhergehenden Ansprüche, wobei das Einspritzventil (100) eine äußere obere Dichtung (170) und eine äußere untere Dichtung (180) umfasst, die an einer radialen Außenfläche des Ventilgehäuses (120) angeordnet sind und die in Bezug auf die zentrale Längsachse (L) axial zueinander beabstandet sind, wobei die eine oder die mehreren ersten Öffnungen (124) zwischen der äußeren oberen Dichtung (170) und der äußeren unteren Dichtung (180) angeordnet ist/sind.

10. Verfahren zum Betreiben eines Einspritzventils (100) nach einem der vorhergehenden Ansprüche, wobei das Fluid durch das Einspritzventil (100) von der einen oder den mehreren ersten Öffnungen (124) in den Ventilhohlraum (122) und durch die zweite Öffnung (126) aus dem Ventilhohlraum (122) strömt.

11. Verfahren zum Betreiben eines Einspritzventils (100) nach einem der Ansprüche 1 bis 10, wobei das Fluid durch das Einspritzventil (100) von der zweiten Öffnung (126) in den Ventilhohlraum (122) und durch die eine oder die mehreren ersten Öffnungen (124) aus dem Ventilhohlraum (122) strömt.

12. Motor mit einem Einspritzventil (100) nach einem der vorhergehenden Ansprüche 1 bis 9.

## Revendications

1. Soupape d'injection (100) destinée à commander un écoulement de fluide, dans laquelle la soupape d'injection (100) s'étend le long d'un axe central longitudinal (L) et comprend un corps de soupape (120), un élément d'armature (140), une pièce polaire (160) et un ressort d'étalonnage (150), dans laquelle le corps de soupape (120) forme une cavité de soupape (122) et comprend un siège de soupape (128) et une première et une seconde ouverture (124, 126) destinées à permettre l'écoulement de fluide à travers la soupape d'injection (100),
dans laquelle l'élément d'armature (140) est disposé mobile axialement dans la cavité (122) et comprend une partie d'armature (142), une partie pointeau (144) et un alésage qui loge le ressort d'étalonnage (150) et fournit une première surface de contact (152) pour le ressort d'étalonnage (150),
dans laquelle la pièce polaire (160) est disposée sur le corps de soupape (120) et fournit une seconde surface de contact (154) pour le ressort d'étalonnage (150),
dans laquelle la partie pointeau (144) est pressée contre le siège de soupape (128) par le ressort d'étalonnage (150) dans une position fermée empêchant l'écoulement de fluide à travers la seconde ouverture (126) et dans laquelle la partie pointeau (144) permet l'écoulement de fluide à travers la seconde ouverture (126) dans d'autres positions,
dans laquelle la première ouverture (124) s'étend radialement à travers le corps de soupape (120) par rapport à l'axe central longitudinal (L) et la seconde ouverture (126) s'étend dans une direction axiale à travers le corps de soupape (120) par rapport à l'axe central longitudinal (L) de sorte que l'axe de la première ouverture (124) et l'axe de la seconde ouverture (126) soient disposés suivant un angle l'un par rapport à l'autre, **caractérisée en ce que** la soupape d'injection (100) comprend un actionneur à électro-aimant (190) qui attire l'élément d'armature (140) lorsqu'il est sous tension et déplace ainsi la partie pointeau (144) à l'opposé de la position fermée dans d'autres positions pour permettre l'écoulement de fluide à travers la soupape d'injection (100), l'élément d'armature (140) comprend une première saillie de guidage (148) et une seconde saillie de guidage (149) qui sont espacées axialement l'une de l'autre par rapport à l'axe central longitudinal (L) et qui contactent au moins en partie une surface interne du corps de soupape (120), grâce à quoi le déplacement de l'élément d'armature (140) est guidé par les saillies de guidage (148, 149) et la surface interne du corps de soupape (120).

2. Soupape d'injection (100) selon la revendication 1, dans laquelle la partie d'armature (142) et la partie pointeau (144) sont formées d'une seule pièce.

3. Soupape d'injection (100) selon l'une quelconque des revendications précédentes, dans laquelle le corps de soupape (120) comprend au moins deux premières ouvertures (124) qui sont réparties latéralement autour du corps de soupape (120).

4. Soupape d'injection (100) selon l'une quelconque des revendications précédentes, dans laquelle la ou les premières ouvertures (124) sont disposées dans une surface du corps de soupape (120) qui s'étend du siège de soupape (128) à une surface imaginaire qui s'étend à angle droit à l'opposé de l'axe central longitudinal (L) le long de la partie d'armature (142) de l'élément d'armature (140) pour définir la surface du corps de soupape (120).

5. Soupape d'injection (100) selon l'une quelconque des revendications précédentes, dans laquelle le corps de soupape (120) présente la forme basique d'un cylindre creux, qui comprend sur sa surface latérale la ou les premières ouvertures (124) et sur sa surface supérieure la pièce polaire (160) qui scelle la cavité de soupape (122) et sur sa surface inférieure la seconde ouverture (126) .

6. Soupape d'injection (100) selon l'une quelconque des revendications précédentes, dans laquelle la pièce polaire (160) est soudée sur le corps de soupape (120) par le biais d'une soudure au laser unique.

7. Soupape d'injection (100) selon l'une quelconque des revendications précédentes, dans laquelle la partie d'armature (142) de l'élément d'armature (140) présente une forme de manchon et entre en contact par une surface externe au moins en partie avec une surface interne du corps de soupape (120), grâce à quoi le déplacement de l'élément d'armature (140) est guidé par la surface interne du corps de soupape (120) et la surface externe de l'élément d'armature (140).

8. Soupape d'injection (100) selon l'une quelconque des revendications précédentes, dans laquelle l'axe de la ou des premières ouvertures (124) et l'axe de la seconde ouverture (126) sont disposés à un angle de 90 degrés l'un par rapport à l'autre.

9. Soupape d'injection (100) selon l'une quelconque des revendications précédentes, dans laquelle la soupape d'injection (100) comprend un joint d'étanchéité supérieur externe (170) et un joint d'étanchéité inférieur externe (180), qui sont disposés sur une surface externe radiale du corps de soupape (120) et qui sont espacés axialement l'un de l'autre par rapport à l'axe central longitudinal (L), dans laquelle la ou les premières ouvertures (124) est ou sont disposées entre le joint d'étanchéité supérieur externe (170) et le joint d'étanchéité inférieur externe (180).

10. Procédé de fonctionnement d'une soupape d'injection (100) selon l'une quelconque des revendications précédentes, dans lequel le fluide s'écoule à travers la soupape d'injection (100) depuis la ou les premières ouvertures (124) dans la cavité de soupape (122) et à travers la seconde ouverture (126) hors de la cavité de soupape (122).

11. Procédé de fonctionnement d'une soupape d'injection (100) selon l'une quelconque des revendications 1 à 10, dans lequel le fluide s'écoule à travers la soupape d'injection (100) depuis la seconde ouverture (126) dans la cavité de soupape (122) et à travers la ou les premières ouvertures (124) hors de la cavité de soupape (122) .

12. Moteur comportant une soupape d'injection (100) selon l'une quelconque des revendications précédentes 1 à 9.
